# EUROPÄISCHE PATENTANMELDUNG

(11) **EP 1 262 905 A2**
(43) Veröffentlichungstag der Anmeldung: **04.12.2002**
(21) Anmeldenummer: 02010549.0
(22) Anmeldetag: 10.05.2002
(51) Int. Cl.: G06K 7/10

(54) **Optoelektronische Vorrichtung**

(30) Priorität: 30.05.2001 DE 10126155
(71) Anmelder: Leuze electronic GmbH, D-73277 Owen (DE)
(72) Erfinder: Argast, Martin, 72584 Hülben (DE)
(74) Vertreter: Ruckh, Rainer Gerhard, Dr.

(57) **Zusammenfassung**

Die Erfindung betrifft eine optoelektronische Vorrichtung (1) zur Erfassung von Objekten (8) in einem Überwachungsbereich mit einem Sendelichtstrahlen (2) emittierenden Sender (3), wenigstens einem Empfangslichtstrahlen (4) empfangenden Empfänger (5) und einer Auswerteeinheit (6) zur Auswertung der am Ausgang des Empfängers (5) anstehenden Empfangssignale. Die Sendelichtstrahlen (2) werden mittels einer Ablenkeinheit (11) abgelenkt und sind entlang mehrerer versetzt zueinander angeordneter Abtastlinien geführt, welche jeweils einen Teilüberwachungsbereich bilden. In der Auswerteeinheit (6) wird bei Eindringen eines Objektes (8) in einen Teilüberwachungsbereich jeweils ein Objektfeststellungssignal generiert. Aus den einzelnen Objektfeststellungssignalen für die verschiedenen Teilüberwachungsbereiche wird in der Auswerteeinheit (6) ein Ausgangssignal generiert.

## Beschreibung

Die Erfindung betrifft eine optoelektronische Vorrichtung gemäß dem Oberbegriff des Anspruchs 1.

Derartige optoelektronische Vorrichtungen sind insbesondere als Lichttaster ausgebildet. Der Sensor eines solchen Lichttasters emittiert typischerweise Sendelichtstrahlen, die längs einer Strahlachse verlaufen. Der dadurch mit den Sendelichtstrahlen erfassbare Überwachungsbereich ist durch den Strahldurchmesser der Sendelichtstrahlen begrenzt. Zur Überwachung flächiger Überwachungsbereiche müssen daher Anordnungen mit mehreren Lichttastern vorgesehen werden.

Insbesondere im Bereich der Tür- und Torüberwachung muss als Flächenbereich ein möglichst großer Bereich einer Tür oder eines Tores erfasst werden, um sicher zu erkennen, ob eine Person oder ein Objekt in diesen Bereich eindringt.

Eine Anordnung mit mehreren Lichttastern führt zu einem unerwünscht hohen Konstruktions- und Kostenaufwand.

Um diesen Nachteil zu umgehen, kann prinzipiell der Bereich einer Tür oder eines Tores auch mit einem einzelnen Lichttaster überwacht werden. In diesem Fall müssen die vom Sender emittierten Sendelichtstrahlen mit geeigneten Linsensystemen so aufgeweitet werden, dass die Sendelichtstrahlen einen fächerförmig aufgeweiteten Strahlkegel bilden, der einen Großteil der Tür oder des Tores abdeckt. Üblicherweise befindet sich der Lichttaster am oberen Rahmen der Tür oder des Tores, so dass die Sendelichtstrahlen auf den Boden gerichtet sind, welcher die Tür oder das Tor begrenzt. Dringt ein Objekt in den Bereich der Tür oder des Tores ein, so wird dadurch typischerweise nur ein kleiner Teil der aufgeweiteten Sendelichtstrahlen abgeschattet, während der Großteil der Sendelichtstrahlen nach wie vor auf den Boden auftrifft. Damit wird bei Eindringen eines Objektes in den Überwachungsbereich gegenüber dem freien Strahlengang, bei welchem die Sendelichtstrahlen ungehindert auf den Boden treffen, nur eine kleine Signaländerung am Ausgang des Empfängers erhalten. Dementsprechend gering ist die Nachweissicherheit des so ausgebildeten Lichttasters.

Der Erfindung liegt die Aufgabe zugrunde, eine optoelektronische Vorrichtung der eingangs genannten Art bereitzustellen, mittels derer innerhalb eines möglichst großen Überwachungsbereichs mit hoher Sicherheit bei gleichzeitig geringem konstruktiven Aufwand Objekte erfassbar sind.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung dient zur Erfassung von Objekten in einem Überwachungsbereich und weist einen Sendelichtstrahlen emittierenden Sender, wenigstens einen Empfangslichtstrahlen empfangenden Empfänger und eine Auswerteeinheit zur Auswertung der am Ausgang des Empfängers anstehenden Empfangssignale auf. Die Sendelichtstrahlen werden mittels einer Ablenkeinheit abgelenkt, wobei diese entlang mehrerer versetzt zueinander angeordneter Abtastlinien geführt sind, welche jeweils einen Teilüberwachungsbereich bilden. In der Auswerteeinheit wird bei Eindringen eines Objektes in einem Teilüberwachungsbereich jeweils ein Objektfeststellungssignal generiert. Aus den einzelnen Objektfeststellungssignalen wird für die verschiedenen Teilüberwachungsbereiche in der Auswerteeinheit ein Ausgangssignal generiert.

Ein wesentlicher Vorteil der erfindungsgemäßen optoelektronischen Vorrichtung besteht darin, dass der von dieser erfasste Überwachungsbereich nicht durch den Strahlquerschnitt der Sendelichtstrahlen begrenzt ist, sondern durch die Führung der Sendelichtstrahlen über die Ablenkeinheit auf mehrere versetzt zueinander laufende Abtastlinien erweitert ist.

Damit kann die erfindungsgemäße optoelektronische Vorrichtung zur Überwachung ausgedehnter, flächiger Bereiche eingesetzt werden. Insbesondere ist die optoelektronische Vorrichtung vorteilhaft bei Tür- und Torüberwachungen einsetzbar. Dabei reicht eine optoelektronische Vorrichtung aus, um den gesamten Bereich einer Tür oder eines Tores zu überwachen.

Ein weiterer Vorteil der erfindungsgemäßen optoelektronischen Vorrichtung besteht darin, dass die vom Sender emittierten Sendelichtstrahlen durch die Ablenkeinheit nur geringfügig in Scanrichtung aufgeweitet werden, um den Überwachungsbereich abzudecken. Vielmehr werden die Sendelichtstrahlen ohne Strahlaufweitung periodisch entlang der Abtastlinien geführt.

Damit ist die Lichtintensität der Sendelichtstrahlen nicht über den gesamten Überwachungsbereich verteilt, sondern bleibt auf die einzelnen Abtastpunkte bei der Ablenkung entlang der Abtastlinien konzentriert. Bei einem Eindringen eines Objektes in den Überwachungsbereich treffen die Sendelichtstrahlen daher an der entsprechenden Stelle des Überwachungsbereichs vollständig auf das Objekt auf, wodurch sich eine signifikante Änderung der Empfangssignale gegenüber einem freien Strahlengang ergibt und eine dementsprechend hohe Nachweisempfindlichkeit erhalten wird.

Ein weiterer Vorteil der erfindungsgemäßen optoelektronischen Vorrichtung besteht darin, dass Objekte in den einzelnen Teilüberwachungsbereichen, welche von den verschiedenen Abtastlinien gebildet sind, separat erfassbar sind. Aus diesen Objekterfassungen innerhalb der Teilüberwachungsbereiche wird in der Auswerteeinheit ein Ausgangssignal gebildet, welches als Objektfeststellungssignal, Bewegungsfeststellungssignal oder Zählsignal ausgebildet wird. Dadurch weist die optoelektronische Vorrichtung bei geringem konstruktiven Aufwand einen großen Leistungsumfang auf, durch welchen die optoelektronische Vorrichtung für verschiedenartige Überwachungsfunktionen einsetzbar ist.

Wird die optoelektronische Vorrichtung beispielsweise für eine Tür- oder Torüberwachung eingesetzt, so verlaufen die Abtastlinien vorzugsweise parallel in Abstand zueinander jeweils über die gesamte Breite einer Tür oder eines Tores.

Bei Eindringen eines Objektes oder einer Person in den Tür- oder Torbereich erfolgt für sämtliche Abtastlinien eine Strahlunterbrechung der Sendelichtstrahlen.

Durch die Mehrfachregistrierung der Strahlunterbrechungen innerhalb der einzelnen Teilüberwachungsbereiche wird eine erhöhte Nachweissicherheit bei der Objektdetektion erhalten.

Weiterhin kann in der Auswerteeinheit der optoelektronischen Vorrichtung die zeitliche Abfolge der Objektdetektion in den einzelnen Teilüberwachungsbereichen registriert werden, wodurch als Ausgangssignal ein Bewegungsfeststellungssignal generiert wird, anhand dessen die Bewegungsrichtung und Geschwindigkeit des Objektes oder der Person bei Passieren des Tür- oder Torbereichs ermittelt wird.

Schließlich können die Objektdetektionen innerhalb der Teilüberwachungsbereiche zur Zählung von Objekten oder Personen im Tür- und Torbereich verwendet werden.

Die Erfindung wird im Nachstehenden anhand der Zeichnungen erläutert. Es zeigen:
- Figur 1:: Blockschaltbild der erfindungsgemäßen optoelektronischen Vorrichtung.
- Figur 2:: Erstes Ausführungsbeispiel der optischen Komponenten der optoelektronischen Vorrichtung gemäß Figur 1
a) in einer Querschnittsdarstellung
b) in einer Längsschnittsdarstellung.
- Figur 3:: Schematische Darstellung eines Microscanspiegels für die Anordnung gemäß Figur 2.
- Figur 4:: Zweites Ausführungsbeispiel der optischen Komponenten der optoelektronischen Vorrichtung gemäß Figur 1
a) in einer Querschnittsdarstellung
b) in einer Längsschnittsdarstellung.
- Figur 5:: Drittes Ausführungsbeispiel der optischen Komponenten der optoelektronischen Vorrichtung gemäß Figur 1.
- Figur 6a:: Erstes Applikationsbeispiel für die optoelektronische Vorrichtung gemäß Figur 1.
- Figur 6b:: Längsschnitt durch die Anordnung gemäß Figur 1.
- Figur 6c:: Typischer Pegelverlauf der Empfangssignale der optoelektronischen Vorrichtung für die Anordnung gemäß Figuren 6a und 6b.
- Figur 7:: Zweites Applikationsbeispiel für die optoelektronische Vorrichtung gemäß Figur 1.
- Figur 8:: Drittes Applikationsbeispiel für die optoelektronische Vorrichtung gemäß Figur 1.
- Figur 9:: Viertes Applikationsbeispiel für die optoelektronische Vorrichtung gemäß Figur 1.
- Figur 10:: Fünftes Applikationsbeispiel für die optoelektronische Vorrichtung gemäß Figur 1.
- Figur 11a, b:: Empfangssignalverläufe für das Applikationsbeispiel gemäß Figur 10.

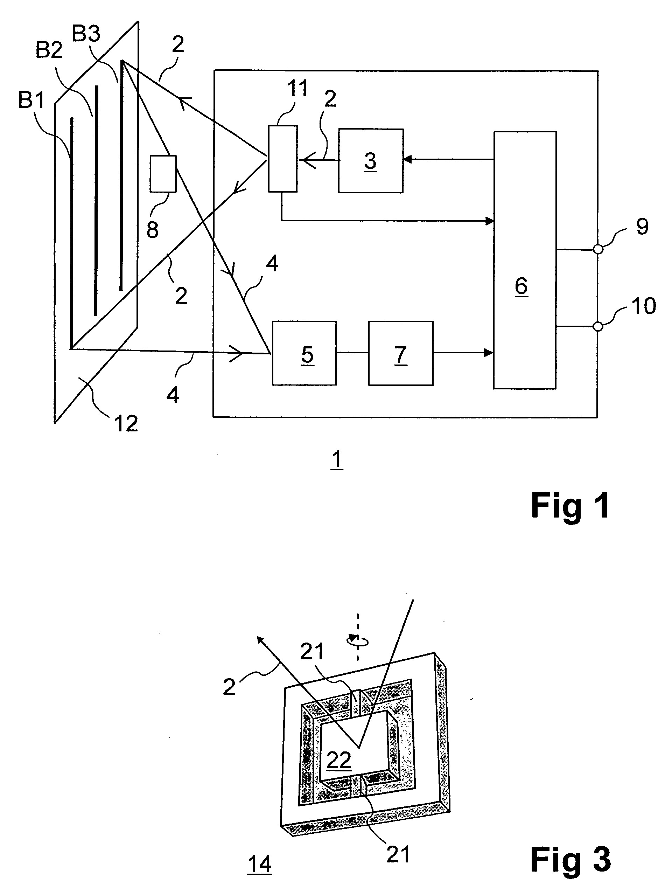

Figur 1 zeigt schematisch den Aufbau eines Ausführungsbeispiels der erfindungsgemäßen optoelektronischen Vorrichtung 1. Die optoelektronische Vorrichtung 1 weist einen Sendelichtstrahlen 2 emittierenden Sender 3 und einen Empfangslichtstrahlen 4 empfangenden Empfänger 5 auf. Der Sender 3 ist von einem Laser gebildet. Der Empfänger 5 ist von einer Photodiode gebildet. Der Sender 3 ist an eine Auswerteeinheit 6 angeschlossen, von welcher der Sender 3 angesteuert wird. Die Auswerteeinheit 6 besteht aus einem Mikroprozessor oder dergleichen. Die am Ausgang des Empfängers 5 entstehenden Empfangssignale werden in einem Verstärker 7 verstärkt und dann in die Auswerteeinheit 6 eingelesen. In der Auswerteeinheit 6 werden zur Detektion von Objekten 8 in einem Überwachungsbereich die Empfangssignale ausgewertet. Die dadurch generierten Ausgangssignale werden über einen an die Auswerteeinheit 6 angeschlossenen Schaltausgang 9 ausgegeben. Weiterhin ist an die Auswerteeinheit 6 eine serielle Schnittstelle 10 angeschlossen. Über diese können Daten, insbesondere auch in der Auswerteeinheit 6 generierte Ausgangssignale ausgegeben werden. Zudem können über die serielle Schnittstelle 10 Parameterwerte in die Auswerteeinheit 6 eingelesen werden.

Erfindungsgemäß ist dem Sender 3 eine Ablenkeinheit 11 nachgeordnet, welche von der Auswerteeinheit 6 angesteuert wird. Mittels der Ablenkeinheit 11 werden die Sendelichtstrahlen 2 periodisch entlang mehrerer versetzt zueinander angeordneter Abtastlinien geführt. Im vorliegenden Beispiel werden die Sendelichtstrahlen 2 entlang dreier Abtastlinien geführt, die in Abstand parallel zueinander verlaufen. Diese Abtastlinien bilden jeweils einen Teilüberwachungsbereich B1, B2, B3, welche zusammen den von den Sendelichtstrahlen 2 überwachten Überwachungsbereich bilden.

Die optoelektronische Vorrichtung 1 arbeitet nach dem Lichttasterprinzip. Bei freiem Strahlengang treffen die entlang der Abtastlinien geführten Sendelichtstrahlen 2 auf einen Hintergrund 12. In einem Einlernvorgang werden die vom Hintergrund 12 stammenden Empfangssignale erfasst und als Referenzwerte in der Auswerteeinheit 6 abgespeichert. In dem auf den Einlernvorgang folgenden Arbeitsbetrieb der optoelektronischen Vorrichtung werden die aktuell ermittelten Empfangssignale ortsaufgelöst für die einzelnen Ablenkpositionen der Sendelichtstrahlen 2 mit den abgespeicherten Referenzwerten verglichen.

Bei Eindringen eines Objektes 8 an einer vorgegebenen Stelle des Überwachungsbereichs wird für die entsprechende Ablenkposition der Sendelichtstrahlen 2 eine signifikante Abweichung der aktuellen Empfangssignale von den Referenzwerten registriert, da die Sendelichtstrahlen 2 vollständig auf das Objekt 8 auftreffen. Vorzugsweise wird hierbei die Abweichung der aktuellen Empfangssignale von den Referenzwerten mit einem Schwellwert bewertet.

Überschreitet die Betragsdifferenz der Empfangssignale und der Referenzwerte einen vorgegebenen Schwellwert wird ein Objektfeststellungssignal generiert. Dabei wird für jeden der Teilüberwachungsbereiche ein separates Objektfeststellungssignal generiert, d.h. es erfolgt für die einzelnen Abtastlinien eine separate Objektüberwachung.

Aus den Objektfeststellungssignalen für die einzelnen Teilüberwachungsbereichen wird in der Auswerteeinheit 6 das Ausgangssignal generiert, wobei vorzugsweise die Objektfeststellungssignale für die einzelnen Teilüberwachungsbereiche logisch verknüpft werden, um das Ausgangssignal zu generieren. Das Ausgangssignal kann wiederum als Objektfeststellungssignal oder auch als Bewegungsfeststellungssignal oder als Zählsignal ausgebildet sein.

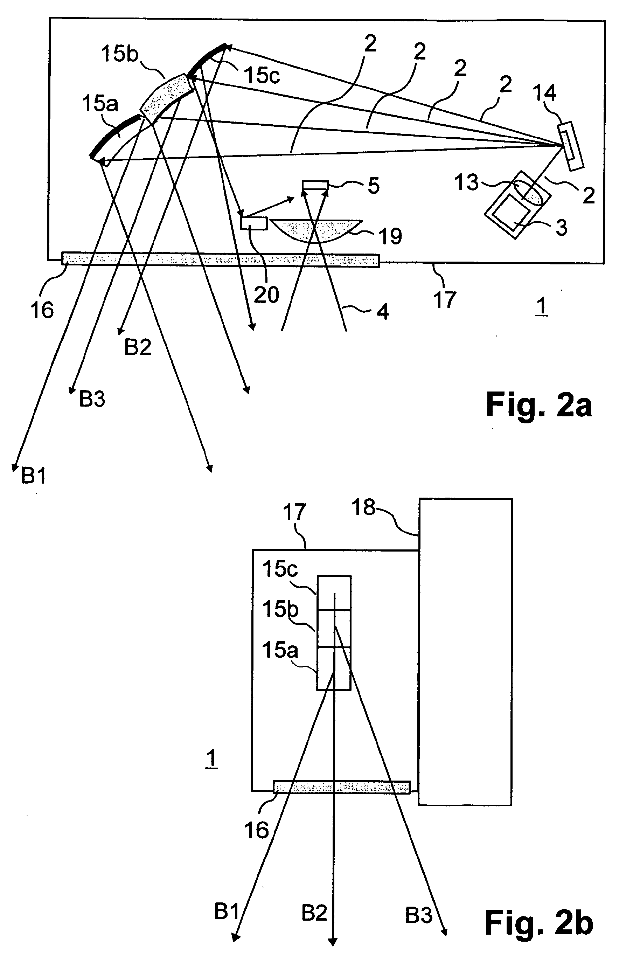

Die Figuren 2a und 2b zeigen ein erstes Ausführungsbeispiel der optischen Komponenten für die optoelektronische Vorrichtung gemäß Figur 1. Die vom Sender 3 emittierten Sendelichtstrahlen 2 werden über eine Sendeoptik 13 der Ablenkeinheit 11 zugeführt. Die Ablenkeinheit 11 besteht im Wesentlichen aus einem Schwingspiegel 14 und diesem nachgeordneten Optikelementen 15a, 15b, 15c.

Der Schwingspiegel 14 weist eine um eine Drehachse drehbare Spiegelfläche auf. Zur periodischen Ablenkung der Sendelichtstrahlen 2 führt die Spiegelfläche eine sinusförmige Auslenkbewegung bezüglich der Drehachse aus.

Durch diese Ablenkbewegung werden die Sendelichtstrahlen 2 nacheinander über die einzelnen Optikelemente 15a, 15b, 15c geführt, wobei die Sendelichtstrahlen 2 an Umlenkflächen der Optikelemente 15a, 15b, 15c abgelenkt werden. Durch diese Umlenkbewegung werden die Sendelichtstrahlen 2 entlang der einzelnen Abtastlinien geführt, welche die Teilüberwachungsbereiche B1, B2, B3 bilden.

Die Optikelemente 15a, 15b, 15c sind im vorliegenden Fall von Zylinderspiegeln gebildet, deren Spiegelflächen konkav ausgebildet sind und räumlich versetzt zueinander liegen. Durch die Schwingbewegung des Schwingspiegels 14 werden die Sendelichtstrahlen 2 nacheinander über die Spiegelflächen der Zylinderlinsen geführt, wobei die Sendelichtstrahlen in Scanrichtung geringfügig aufgeweitet werden. Durch die Ablenkung an dem ersten Zylinderspiegel werden die Sendelichtstrahlen 2 entlang der ersten Abtastlinie geführt. Entsprechend werden die Sendelichtstrahlen 2 durch die Ablenkung an dem zweiten und dritten Zylinderspiegel entlang der zweiten bzw. dritten Abtastlinie geführt. Durch die Neigungen der Spiegelflächen der Zylinderspiegel zueinander verlaufen die Abtastlinien in vorgegebenen Abständen parallel zueinander.

Die so abgelenkten Sendelichtstrahlen 2 durchsetzen ein Fenster 16 in einem Gehäuse 17, in welchem die optoelektronische Vorrichtung 1 integriert ist. Das Gehäuse 17 ist an einer Wand 18 oder einer ähnlichen Unterlage montiert. Die vom Hintergrund 12 oder von einem Objekt 8 reflektierten Empfangslichtstrahlen 4 werden über das Fenster 16 wieder in die optoelektronische Vorrichtung 1 geführt und gelangen über eine Empfangsoptik 19 zum Empfänger 5.

Wie aus Figur 2a ersichtlich, wird im Randbereich des dritten Zylinderspiegels ein Teil der Sendelichtstrahlen 2 auf ein in der optoelektronischen Vorrichtung 1 integriertes Testobjekt 20 geführt. Mittels des Testobjekts 20 wird während jeder vom Schwingspiegel 14 ausgeführten Schwingungsperiode eine Referenzmessung durchgeführt.

Bei der Referenzmessung erfolgt eine Bestimmung der vom Sender 3 zum Testobjekt 20 geführten Lichtintensität, wodurch niederfrequente Störeinflüsse und Drifterscheinungen, die z.B. durch Temperatureinflüsse oder Alterung von elektronischen Bauteilen entstehen, kompensiert werden. Zudem erfolgt durch die Referenzmessung eine Funktionsüberprüfung des Senders 3 und der Ablenkeinheit 11.

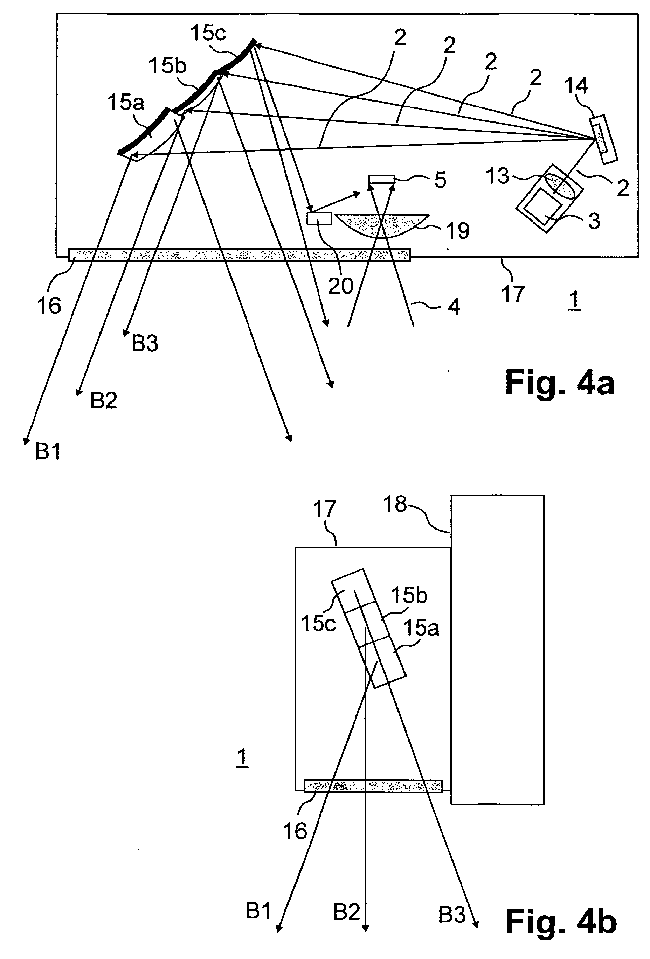

Figur 3 zeigt schematisch den Aufbau des Schwingspiegels 14 für die optoelektronische Vorrichtung 1 gemäß Figur 2. Der Schwingspiegel 14 ist als Microscanspiegel ausgebildet, der eine an dünnen Torsionsstegen 21 aufgehängte Siliziumplatte 22 aufweist. Die Oberfläche der Siliziumplatte 22 bildet eine Spiegelfläche zur Ablenkung der Sendelichtstrahlen 2. Die Siliziumplatte 22 ist um eine Drehachse drehbar gelagert, wobei die Torsionsstege 21 in dieser Drehachse verlaufen. Die Aktivierung der Schwingbewegung des Schwingspiegels 14 erfolgt elektrostatisch. Die gesamte Anordnung ist hermetisch gekapselt und so unempfindlich gegen externe Störeinflüsse.

Die Figuren 4a und 4b zeigen ein weiteres Ausführungsbeispiel der optischen Komponenten der optoelektronischen Vorrichtung 1 gemäß Figur 1. Die in den Figuren 4a, 4b dargestellten Komponenten sind im Wesentlichen identisch mit der Ausführungsform gemäß der Figuren 2a, 2b. Im Unterschied zu diesem Ausführungsbeispiel sind bei der Ausführungsform gemäß den Figuren 4a, 4b konvexe Zylinderspiegel als Optikelemente 15a, 15b, 15c vorgesehen.

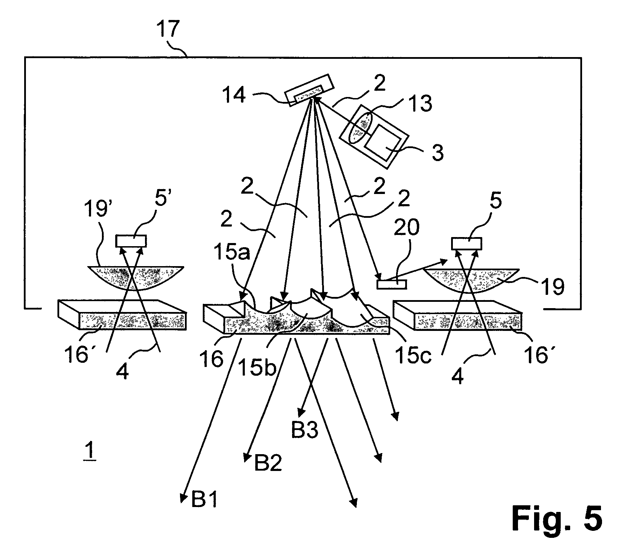

Figur 5 zeigt ein drittes Ausführungsbeispiel der optischen Komponenten gemäß Figur 1. Im Unterschied zu dem Ausführungsbeispiel gemäß Figur 2 sind die Optikelemente 15a, 15b, 15c im vorliegenden Fall von räumlich versetzten Zylinderlinsen gebildet. Diese Zylinderlinsen sind Bestandteil des Fensters 16, durch welches die Sendelichtstrahlen 2 geführt sind. Ein weiterer Unterschied zum Ausführungsbeispiel gemäß Figur 2 besteht darin, dass die optoelektronische Vorrichtung 1 im vorliegenden Fall zwei Empfänger 5, 5' aufweist, welchen jeweils eine Empfangsoptik 19, 19' vorgeordnet ist. Die Empfangslichtstrahlen 4 werden jeweils über ein separates Fenster 16' auf die Empfänger 5, 5' geführt, wobei die Fenster 16' beiderseits des Fensters 16 liegen, durch welche die Sendelichtstrahlen 2 geführt sind. Durch die zwei Empfänger 5, 5' aufweisende Empfangsanordnung können Empfangslichtstrahlen 4 aus einem größeren Winkelbereich empfangen werden.

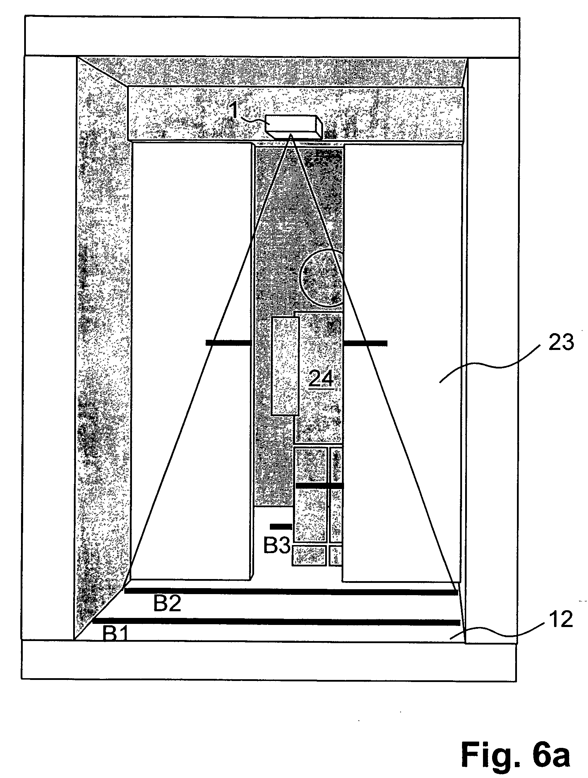

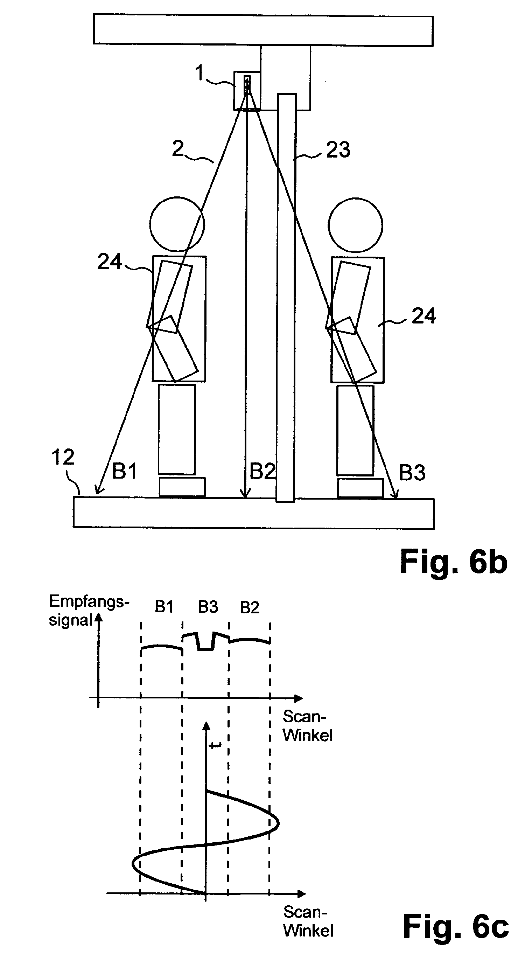

Die Figuren 6a und 6b zeigen ein erstes Applikationsbeispiel bei welchem die optoelektronische Vorrichtung 1 zur Tür- und Torüberwachung eingesetzt wird. Die optoelektronische Vorrichtung 1 wird im vorliegenden Fall über einer Tür 23 montiert und nach unten auf den Boden gerichtet, so dass die Abtastlinie, welche den Teilüberwachungsbereich B1 bildet den Zugangsbereich der Tür 23 erfasst. Mit dem Teilüberwachungsbereich B2 wird der Bereich direkt vor der Tür 23 mit dem Teilüberwachungsbereich B3 der Bereich direkt hinter der Tür 23, bzw. die Tür 23 selbst erfasst, wenn diese geschlossen ist. Der Boden bildet im vorliegenden Fall den Hintergrund 12 auf welchen die Sendelichtstrahlen 2 bei freiem Strahlengang treffen.

Dadurch können, wie in Figur 6b dargestellt, mit den die Teilüberwachungsbereiche B1, B2, B3 bildenden Abtastlinien Personen 24 oder Gegenstände rechtzeitig bei der Annäherung an die Tür 23 erkannt werden. Durch die Überwachung des Bereichs direkt vor der Tür 23 mittels der den Teilüberwachungsbereich B2 bildenden Abtastlinie wird sichergestellt, dass beim Schließen der Tür 23 kein Hindernis vorhanden ist. Mit der den Teilüberwachungsbereich B3 bildenden Abtastlinie wird bei geöffneter Tür 23 der Innenraum beispielsweise einer Aufzugskabine erfasst und damit deren Befüllungsgrad kontrolliert. Beim Schließen der Tür 23 wird die Türposition überwacht und ein Hängenbleiben erkannt. Außerdem kann beim Durchschreiten durch die drei hintereinanderliegenden Teilüberwachungsbereiche B1 bis B3 die Objektgeschwindigkeit und durch die Schrägstellung der den Teilüberwachungsbereich B1 bildenden Abtastlinie die Objekthöhe abgeschätzt werden. Diese Zusatzinformationen können zur Objektidentifikation, z.B. Unterscheidung von Gegenständen, Erwachsenen und Kindern sowie zur Personenzählung genutzt werden.

Figur 6c zeigt die typischen Pegelverläufe des Empfangssignals in Abhängigkeit der momentanen Winkelstellung des Schwingspiegels 14, die in Figur 6c als Scanwinkel bezeichnet ist. Das untere Diagramm in Figur 6c zeigt dabei den entsprechenden zeitlichen Verlauf des vom Schwingspiegel 14 während einer Schwingperiode überstrichenen Scanwinkels. Bei dem in Figur 6c dargestellten Empfangssignalverlauf treffen die Sendelichtstrahlen 2 innerhalb der Teilüberwachungsbereiche B 1 und B2 auf den Boden, welcher den Hintergrund 12 bildet, so dass die Empfangssignalpegel nahezu konstant sind. Dagegen erfolgt innerhalb des Teilüberwachungsbereichs B3 die Detektion von Ausschnitten der Türhälften wie in Figur 6a dargestellt, wodurch die Pegel der Empfangssignale innerhalb der entsprechenden Scanwinkelbereiche erhöht sind.

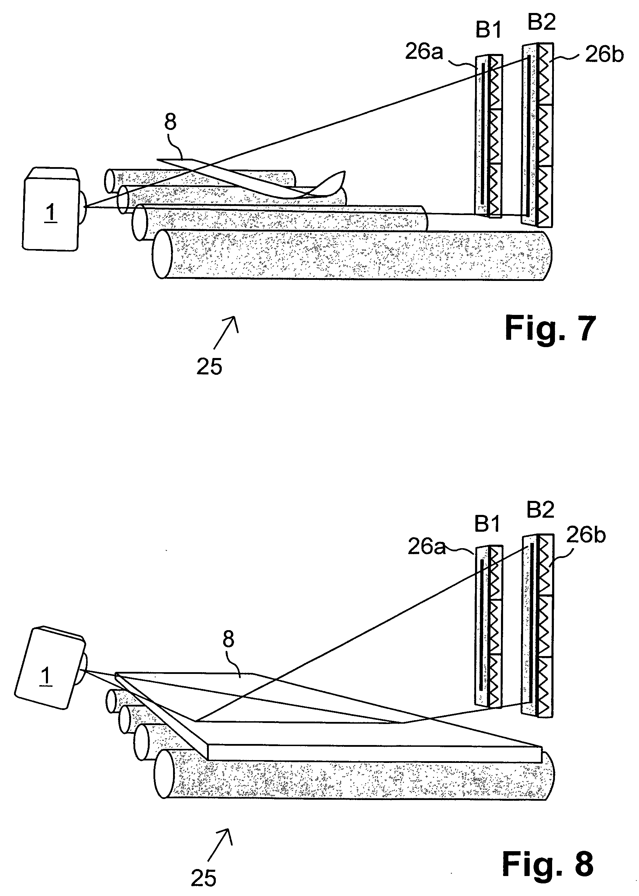

Figur 7 zeigt eine zweites Applikationsbeispiel, bei welchem die optoelektronische Vorrichtung 1 zur Überstandskontrolle von Objekten 8 in Form von Transportgütern, die auf einer Rollenbahn 25 transportiert werden, eingesetzt wird. In diesem und in den folgenden Applikationsbeispielen werden mittels der Ablenkeinheit 11 nur zwei Abtastlinien generiert, welche Teilüberwachungsbereiche B1, B2 bilden. Die optoelektronische Vorrichtung 1 tastet die Objekte 8 quer zur Transportbewegung der Rollenbahn 25 ab und erkennt durch die Ablenkbewegung der Sendelichtstrahlen 2 auch Objektteile, die nicht auf der Rollenbahn 25 aufliegen. Auf der gegenüberliegenden Seite sind mindestens zwei Reflektorleisten 26a, 26b angeordnet, die die Sendelichtstrahlen 2 reflektieren, wodurch das Objekt 8 durch Strahlunterbrechung erkannt wird. Die Sendelichtstrahlen 2 werden entlang der Reflektorleisten 26a, 26b geführt, d.h. die Abtastlinien verlaufen auf den einzelnen Reflektorleisten 26a, 26b. Für kürzere Distanzen kann das Objekt 8 auch nach dem Tasterprinzip direkt , d.h. ohne Reflektorleisten 26a, 26b erkannt werden.

Figur 8 zeigt eine Abwandlung des Ausführungsbeispiels gemäß Figur 7. In diesem Fall werden als Objekte 8 glänzende Gegenstände wie Metallplatten auf der Rollenbahn 25 transportiert. In diesem Fall wird die Spiegelung der Sendelichtstrahlen 2 an der Objektoberfläche dieser Gegenstände ausgenutzt. Diffus reflektierende Flächen, wie z.B. die Oberfläche der Rollenbahn 25 werden nicht erfasst, so dass darauf aufliegende glänzende Flächen sicher erkannt und vom Untergrund unterschieden werden. Diese Anordnung bietet den Vorteil mit einer optoelektronischen Vorrichtung 1 die ganze Breite der Rollenbahn 25 überwachen zu können und zusätzlich die seitliche Position von schmalen Objekten 8 ermitteln zu können.

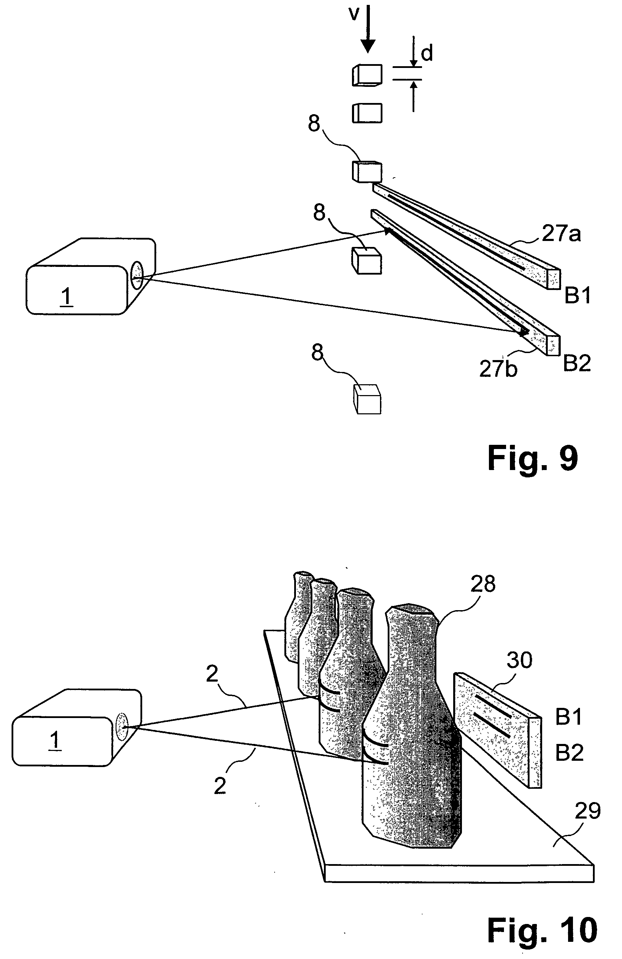

Figur 9 zeigt ein viertes Applikationsbeispiel, bei welcher die optoelektronische Vorrichtung 1 zur Auswurfkontrolle eingesetzt wird, die z.B. zur Zählung von Spritzteilen verwendet wird. Bei freiem Strahlengang treffen die innerhalb der Teilüberwachungsbereiche B1, B2 geführten Sendelichtstrahlen 2 jeweils auf einen Reflektor 27a, 27b. Durch die frei fallendenden Objekte 8 werden die Strahlengänge der Sendelichtstrahlen 2 innerhalb der Teilüberwachungsbereiche B1, B2 lokal kurzzeitig unterbrochen, wodurch die Objekte 8 detektiert werden und dabei durch die zeitliche Erfassung der nacheinander erfolgenden Strahlunterbrechungen innerhalb der Teilüberwachungsbereiche B1, B2 die Fallbewegungen erkannt werden. Dabei darf das Produkt aus Fallgeschwindigkeit v und Objekthöhe d einen durch die Abtastfrequenz der Sendelichtstrahlen 2 vorgegebenen Maximalwert nicht übersteigen. Dann kann durch geeignete Wahl der Teilüberwachungsbereiche B1, B2 die Fallgeschwindigkeit der Auswurfteile kontrolliert werden.

Figur 10 zeigt ein fünftes Applikationsbeispiel, bei welchem die optoelektronische Vorrichtung 1 zur Erkennung und Zählung von Klarglasflaschen 28 oder Kunststoffflaschen eingesetzt wird. Die Abtastlinien der Sendelichtstrahlen 2 verlaufen horizontal und quer zur Bewegungsrichtung der Klarglasflaschen 28, die auf einem Transportband 29 stehend oder in einer Führung am Flaschenhals hängend an der optoelektronischen Vorrichtung 1 vorbei transportiert werden. Der Scanwinkel und Objektabstand ist so ausgelegt, dass etwa zwei Flaschenbreiten überstrichen werden. In der Flaschenlücke fällt das Sendelicht auf den gegenüber angeordneten Reflektor 30.

Mit der optoelektronischen Vorrichtung 1 können die Klarglasflaschen 28 sicher detektiert werden, und zwar unabhängig davon, ob zwischen den einzelnen Klarglasflaschen 28 Lücken vorhanden sind oder nicht.

Im vorliegenden Fall werden die Sendelichtstrahlen 2 nur entlang zweier Abtastlinien geführt, welche die Teilüberwachungsbereiche B1, B2 bilden.

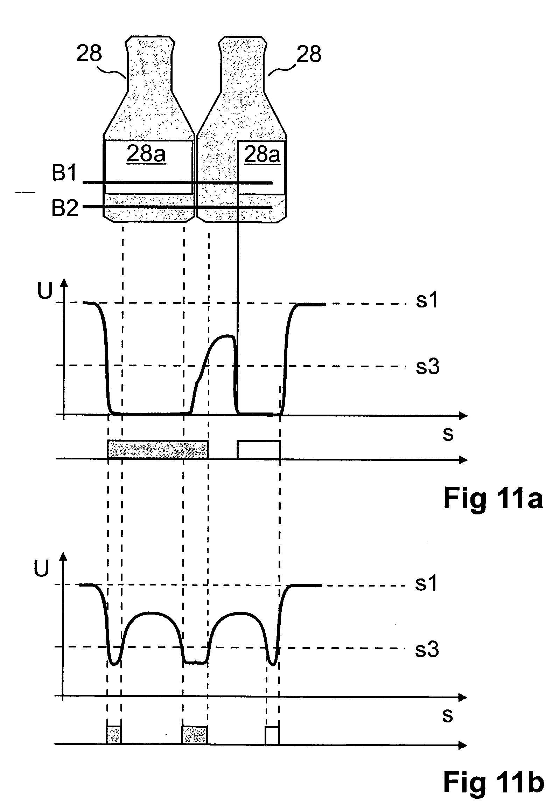

Die Figuren 11a, 11b zeigen die Empfangssignalverläufe bei der Abtastung zweier Klarglasflaschen 28, welche ohne Lücke hintereinander angeordnet sind. Die Abtastung im Teilüberwachungsbereich B1 führt zu dem Empfangssignalverlauf nach Figur 11a. Bei dieser Abtastung führt eine Detektion von Flaschenetiketten 28a zur vollständigen Abdunklung der Sendelichtstrahlen 2. Im Teilüberwachungsbereich B2 werden die Klarglasflaschen 28 im Bodenbereich abgetastet, wodurch der Empfangssignalverlauf gemäß Figur 11b erhalten wird. In diesem Fall werden die Flaschenetiketten 28a nicht von den Sendelichtstrahlen 2 erfasst.

Die Berechnung der Empfangssignale erfolgt jeweils mit Schwellwerten s1, s3, wobei der Schwellwert s1 als Referenzschwellwert dem Empfangssignalpegel bei freiem Strahlengang entspricht. Durch den großen Abstand des Schwellwertes s3 vom Referenzschwellwert s1 ist die optoelektronischen Vorrichtung 1 unempfindlich gegenüber Störungen. Dabei ist der Schwellwert s3 so gewählt, dass bei Abtastung des Randes einer Klarglasflasche 28 der Empfangssignalpegel unterhalb von s3 liegt. Durch Fokussierungseffekte liegt der Empfangssignalpegel bei Abtastung der Flaschenmitte oberhalb von s3, solange keine Flaschenetiketten 28a abgetastet werden.

Die Auswertung zur sicheren Flaschenerkennung erfolgt nach folgendem Algorithmus:

Eine Klarglasflasche 28 gilt als erkannt, wenn in einem Teilüberwachungsbereich B1 oder B2 mindestens zwei Unterschreitungen des Schwellwertes s3 innerhalb eines vorgegebenen Zeitfensters registriert werden, wobei das Zeitfenster etwa 70% einer Schwingungsperiode des Schwingungsspiegels entspricht. Die freie Lichtstrecke gilt als erkannt, wenn im gesamten Zeitfenster der Empfangssignalpegel den Schwellwert s3 überschreitet und nur um maximal etwa 5% variiert. Der bei freier Lichtstrecke ermittelte und über einen bestimmten Zeitraum gemittelte Messwert dient als Referenzwert, mittels dessen der Schwellwert s3 neu berechnet wird, wodurch Effekte infolge Verschmutzung, Temperaturdrift und Alterung von Bauelementen kompensiert werden. Da sich die genannten Einflussgrößen nur sehr langsam ändern, kann durch Vergleich des neuen mit dem alten Referenzwert eine Plausibilitätsprüfung durchgeführt und gegebenenfalls der neue Referenzwert verworfen, bzw. eine Warnmeldung generiert werden.

### Bezugszeichenliste

- (1): Optoelektronische Vorrichtung
- (2): Sendelichtstrahl
- (3): Sender
- (4): Empfangslichtstrahl
- (5, 5'): Empfänger
- (6): Auswerteeinheit
- (7): Verstärker
- (8): Objekt
- (9): Schaltausgang
- (10): serielle Schnittstelle
- (11): Ablenkeinheit
- (12): Hintergrund
- (13): Sendeoptik
- (14): Schwingspiegel
- (15a, b, c): Optikelement
- (16, 16'): Fenster
- (17): Gehäuse
- (18): Wand
- (19, 19'): Empfangsoptik
- (20): Testobjekt
- (21): Torsionssteg
- (22): Siliziumplatte
- (23): Tür
- (24): Person
- (25): Rollenbahn
- (26a, b): Reflektorleiste
- (27a, b): Reflektor
- (28): Klarglasflasche
- (28a): Flaschenetikett
- (29): Transportband
- (30): Reflektor

## Patentansprüche

1. Optoelektronische Vorrichtung zur Erfassung von Objekten in einem Überwachungsbereich mit einem Sendelichtstrahlen emittierenden Sender, wenigstens einem Empfangslichtstrahlen empfangenden Empfänger und einer Auswerteeinheit zur Auswertung der am Ausgang des Empfängers anstehenden Empfangssignale, **dadurch gekennzeichnet, dass** die Sendelichtstrahlen (2) mittels einer Ablenkeinheit (11) abgelenkt werden, so dass diese entlang mehrerer versetzt zueinander angeordneter Abtastlinien geführt sind, welche jeweils einen Teilüberwachungsbereich bilden, dass in der Auswerteeinheit (6) bei Eindringen eines Objektes (8) in einen Teilüberwachungsbereich jeweils ein Objektfeststellungssignal generiert wird, und dass aus den einzelnen Objektfeststellungssignalen für die verschiedenen Teilüberwachungsbereiche in der Auswerteeinheit (6) ein Ausgangssignal generiert wird.

2. Optoelektronische Vorrichtung nach Anspruch 1, **dadurch gekennzeichnet, dass** das Ausgangssignal als Objektfeststellungssignal ausgebildet ist.

3. Optoelektronische Vorrichtung nach einem der Ansprüche 1 oder 2, **dadurch gekennzeichnet, dass** das Ausgangssignal als Bewegungsfeststellungssignal ausgebildet ist.

4. Optoelektronische Vorrichtung nach einem der Ansprüche 1 - 3, **dadurch gekennzeichnet, dass** das Ausgangssignal als Zählsignal ausgebildet ist.

5. Optoelektronische Vorrichtung nach einem der Ansprüche 1 - 4, **dadurch gekennzeichnet, dass** die Ablenkeinheit einen Schwingspiegel (14) und diesem nachgeordnete Optikelemente (15a, 15b, 15c) mit versetzt zueinander angeordneten Umlenkflächen aufweist, wobei die Sendelichtstrahlen (2) durch die Strahlablenkung am Schwingspiegel (14) nacheinander über die Umlenkflächen geführt sind.

6. Optoelektronische Vorrichtung nach Anspruch 5, **dadurch gekennzeichnet, dass** die Sendelichtstrahlen (2) durch Ablenkung an jeweils einer Umlenkfläche entlang jeweils einer Abtastlinie geführt sind.

7. Optoelektronische Vorrichtung nach einem der Ansprüche 5 oder 6, **dadurch gekennzeichnet, dass** der Schwingspiegel (14) von einem Microscanspiegel gebildet ist.

8. Optoelektronische Vorrichtung nach einem der Ansprüche 5 - 7, **dadurch gekennzeichnet, dass** die Optikelemente (15a, 15b, 15c) von Zylinderspiegeln oder Zylinderlinsen gebildet sind.

9. Optoelektronische Vorrichtung nach Anspruch 8, **dadurch gekennzeichnet, dass** die Optikelemente (15a, 15b, 15c) Bestandteil eines Fensters 16 sind.

10. Optoelektronische Vorrichtung nach einem der Ansprüche 1 - 9, **dadurch gekennzeichnet, dass** die Abtastlinien jeweils längs einer Geraden verlaufen.

11. Optoelektronische Vorrichtung nach Anspruch 10, **dadurch gekennzeichnet, dass** die Abtastlinien jeweils parallel in Abstand zueinander verlaufen.

12. Optoelektronische Vorrichtung nach einem der Ansprüche 1 - 11, **dadurch gekennzeichnet, dass** diese zwei Empfänger (5, 5') aufweist.

13. Optoelektronische Vorrichtung nach Anspruch 12, **dadurch gekennzeichnet, dass** die Empfänger (5, 5') beidseits der Optikelemente (15a, 15b, 15c) liegend angeordnet sind.

14. Optoelektronische Vorrichtung nach einem der Ansprüche 1 - 13, **dadurch gekennzeichnet, dass** diese zur Tür- und Torüberwachung eingesetzt wird.

15. Optoelektronische Vorrichtung nach einem der Ansprüche 1 - 14, **dadurch gekennzeichnet, dass** diese zur Detektion von auf einer Förderstrecke geförderten Klarglas- oder Kunststoff-Flaschen (28) eingesetzt wird.

16. Optoelektronische Vorrichtung nach einem der Ansprüche 1 - 15, **dadurch gekennzeichnet, dass** diese zur Zählung von Teilen eingesetzt wird.

17. Optoelektronische Vorrichtung nach einem der Ansprüche 1 - 16, **dadurch gekennzeichnet, dass** diese zur Überstandskontrolle oder zur Kontrolle von glänzenden Objekten eingesetzt wird.
